Europäisches Patentamt

European Patent Office

Office européen des brevets

(11) Publication number: **0 217 508**
**B1**

(12) **EUROPEAN PATENT SPECIFICATION**

(45) Date of publication of patent specification: **31.10.90**

(21) Application number: **86305941.6**

(22) Date of filing: **01.08.86**

(51) Int. Cl.⁵: **F 25 D 3/00, B 29 C 41/20, B 29 C 67/18**

(54) Cooling device and method of making a cooling device.

(30) Priority: **02.08.85 GB 8519507**

(43) Date of publication of application:
**08.04.87 Bulletin 87/15**

(45) Publication of the grant of the patent:
**31.10.90 Bulletin 90/44**

(84) Designated Contracting States:
**AT BE CH DE FR GB IT LI LU NL SE**

(56) References cited:
**EP-A-0 061 697**
**EP-A-0 104 699**
**BE-A- 379 694**
**DE-A-1 451 232**
**FR-A-1 576 425**
**GB-A- 878 971**
**GB-A-1 160 961**
**US-A-3 610 457**
**US-A-4 143 193**
**US-A-4 459 812**

(73) Proprietor: **POLARPAC SYSTEMS LIMITED**
**Hylton Road Trading Estate**
**Worcester WR2 5JS (GB)**

(72) Inventor: **Gatley, Richard**
**The Old Police Station**
**Leigh Worcester (GB)**
Inventor: **Fox, Ian Frederick**
**Ayngstree Cottage**
**Clifton-on-Teme Worcester (GB)**
Inventor: **Neale, Greville Theodore**
**Sinton Meadow Stocks Lane**
**Leigh Sinton Worcestershire (GB)**

(74) Representative: **Lally, William et al**
**FORRESTER & BOEHMERT Widenmayerstrasse 4/I**
**D-8000 München 22 (DE)**

Courier Press, Leamington Spa, England.

## Description

This invention is concerned with improvements relating to cooling devices, particularly of the kind (hereinafter referred to as "being of the kind specified") having a relatively high specific/latent heat, and which may be used to retain a space in which it is located cool for a relatively long period of time.

For example, cooling devices of the kind specified are used in vehicles to retain the transportation compartment of the vehicle, and the goods transported, at low temperature. Conventionally a cooling device comprising an elongate housing is utilised, which may be mounted in the roof of the transportation compartment and which is filled with a eutectic liquid (conventionally comprising brine) and through which a cooling pipe extends. During charging of the cooling device a cooling liquid is fed through the cooling pipe from a refrigeration device to freeze the eutectic liquid, which then absorbs heat from the transportation compartment over a period of time to retain the transportation compartment at a desired temperature.

It will of course be appreciated that the nature of the eutectic liquid is selected so as to retain the transporation compartment at a desired temperature determined by the freezing/melting point of the eutectic liquid.

Whilst conventionally such cooling devices have been of metal, it has more recently been appreciated that plastics provides a highly desirable material for the elongate housing. A known method of manufacturing such cooling devices involves the use of an extrusion of generally rectangular cross-section, into which a cooling pipe is located and on to which end caps are secured. Desirably, however the cooling pipe enters and exits the housing at the same end, with the pipe extending as an elongate "U" within the housing. Thus the extrusion is of non-square rectangular cross-section. During the extrusion of the housing there is a tendency for the side walls of larger width to collapse inwardly. Consequently it has become practice to utilise as a housing for a cooling device of the kind specified an extrusion having a web inter-connecting the opposite side walls approximately centrally thereof. However, the utilisation of such a web has the disadvantage, that it does not permit any significant increase in the volume confined by the housing under differential expansion, and it may be necessary to fill the housing with eutectic liquid to an extent less than 100%, to provide space for such expansion.

European Specification 0061697A1 illustrates a moulded housing in which webs extend between the side walls, as described above.

Difficulty is also encountered in cooling devices using extruded housings in the supporting of the cooling pipes, particularly during differential thermal expansion, and in practice it has been found necessary to utilise spacer elements on the pipe which engage with the walls on the housing compartments. This however restricts free-flow of the eutectic liquid within the housing, and localised areas of eutectic liquid may result which are surrounded by plugs of frozen material. This under certain circumstances can cause damage to the housing.

Another difficulty which has been encountered is that, in cooling devices of the kind specified, it is on the one hand desirable to utilise steel as cooling pipework, but to utilise brass connections on the housing by which the device may be connected to a refrigeration unit. However, in use electrolytic action of the brine causes damages at the junction between the steel and brass. For this reason it is in general necesary to utilise copper for the cooling pipes.

According to this invention there is provided a method of manufacturing a cooling device comprising a housing containing a eutectic liquid, an elongate cooling pipe in the housing through which cooling fluid is fed to cool the eutectic liquid, the elongate pipe comprising end portions and an intermediate portion between said end portions, characterised by the steps:

(a) locating the end portions in a rotational-mould;

(b) supporting the cooling pipe within the mould by the use of a supporting means from the intermediate portion through a wall of the mould; and

(c) rotationally-moulding the housing of the cooling device around the cooling pipe and around the support means.

Preferably the supporting means comprises a support member which engages said intermediate portion to provide support for the cooling pipe during the rotational-moulding.

If desired the supporting means may comprise elements supported in an aperture in a wall of the mould and which, on completion of the moulding operation, are removed to provide an aperture in the housing. The aperture may provide a means for the introduction of a eutectic liquid into the cooling device, and said aperture may be closed by said elements.

If desired the end portions of the cooling pipe may be located in one end wall of the rotational-mould, and the intermediate portion of the cooling pipe supported by the support means in relation to the opposite end wall of the mould.

According to this invention there is also provided a cooling device comprising a housing containing a eutectic liquid, an elongate cooling pipe in the housing through which cooling fluid may be fed to cool the eutectic liquid, the elongate pipe comprising end portions and an intermediate portion between said end portions, there being provided an aperture in the one end wall of the housing for the introduction of eutectic liquid into the housing, and means to close the aperture, characterised in that the housing is a rotationally-moulded housing and a supporting means is provided extending from the intermediate portion to an end wall of the housing, to support the cooling pipe within the housing.

There will now be given a detailed description, to be read with reference to the accompanying drawing, of two cooling devices which are preferred embodiments of this invention, and which have been selected for the purposes of illustrating the invention by way of example.

In the accompanying drawings:

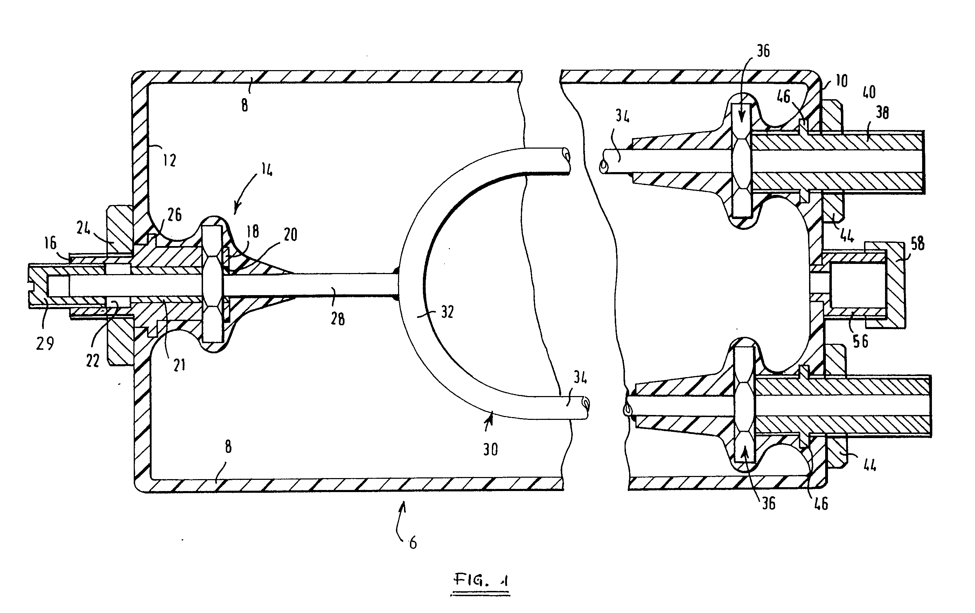

Figure 1 is a schematic section view of the cooling device which is the first embodiment of this invention;

Figure 2 is a schematic section view of the cooling device which is the second embodiment of this invention; and

Figure 3 is a sectional view showing a stage in the moulding of the second embodiment.

The cooling devices which are the preferred embodiments of this invention are generally for use in transportation vehicles, and are designed to maintain the transportation space of such vehicles cool over prolonged periods. It will be appreciated however that the cooling device may also be used in relation to the maintenance of static places at a low temperature.

The device which is the first embodiment comprises an elongate housing 6 of generally rectangular cross-section, comprising side walls 8 and first and second end walls 10, 12. Mounted generally centrally within the end wall 12 is a mounting device 14 comprising a boss 16, which is threaded both interiorly and exteriorly, and a stem 18 provided with a through-bore 20 which opens into the central aperture 22 defined by the boss 16. A lock-nut 24 screwed on to the exterior of the boss 16 clamps the end wall 12 against a flange 26 of the mounting device.

The cooling device also comprises a cooling pipe 30 of elongate "U"-shape, comprising a curved portion 32 and parallel arms 34. The cooling pipe is of steel, and comprises an elongate support member 28 welded to the centre of the curved portion 32, so as to extend generally parallel to, but in opposite directions from, the parallel arms 34. The support member extends into the bore 20 of the stem 18, a sleeve 21 being provided to assist such relative movement.

At the left hand end, the member 28 extends into a bore of a cap 29.

Each of the arms 34 is welded to a brass union 36, each union 36 being somewhat similar to the mounting device 14, comprising an exteriorly threaded boss 38 located in an aperture 40 of the end wall 10, a lock-nut 44 on the boss clamping the wall 10 against a flange 46.

On the exterior of the housing, an exterior pipe may be connected to the boss 38 by a clamping nut (not shown).

Also provided in the end wall 10 is an inlet fitting 56 through which the housing 6 may be filled with a eutectic liquid, the fitting 56 subsequent to such filling being closed by a sealing cap 58.

In use the cooling device which is the first embodiment of this invention is moulded adjacent to the roof of a transportation vehicle, conveniently utilising as mounting means the boss 16, and if desired the bosses 38 and the exterior pipes are connected to a refrigeration unit, conventionally mounted behind the vehicle cab. At a convenient time (usually overnight, or when the vehicle is not otherwise being used) the refrigeration unit is powered, and cooling liquid flows into the cooling pipe 30 via the exterior pipes, reducing the temperature of the eutectic liquid within the housing 6 until such liquid freezes. During such reduction in temperature, differential thermal contraction, particularly of the pipe 30 relative to the housing 8 involves an extension of the support member 28 within the bore 20 (that is, movement to the left, as shown in the drawings).

In the method of manufacture of the cooling device which is the first embodiment of the invention, said method also being illustrative of certain aspects of this invention, the mounting device 14 is first located in one end wall of a rotational moulding mould, and the pipe 30, with unions 36 and supporting device 26 secured thereto, is located within the mould cavity, the support member 28 being inserted into the bore 20 of the stem 18 of the mounting device, and the unions 36 being located in bores in the opposite end walls of the mould. Plastics material is introduced into the mould cavity and the mould heated in conventional manner, and rotated about a number of axes, to deposit plastics material on the walls of the mould to provide the housing. Since the pipe 30 is not heated to any significant extent, plastics material will not be deposited thereon. However mounting device 14 and the unions 36, being supported in the walls of the mould, will be heated to some extent, causing plastics material to be deposited thereon. Thus a skin of plastics material extends from the wall over the mounting device 14 and over both unions 36. This skin of plastics material has two advantages: in relation to the mounting device 14 and unions 36, it may wholly prevent eutectic liquid leaking from the housing 6 during use of the cooling device, and in relation to the unions 36, covers the junction (indicated by the letter "J" in the drawing) between the steel pipe 30 and the brass unions 36, protecting the junction against damage to due to electrolytic action of the eutectic liquid.

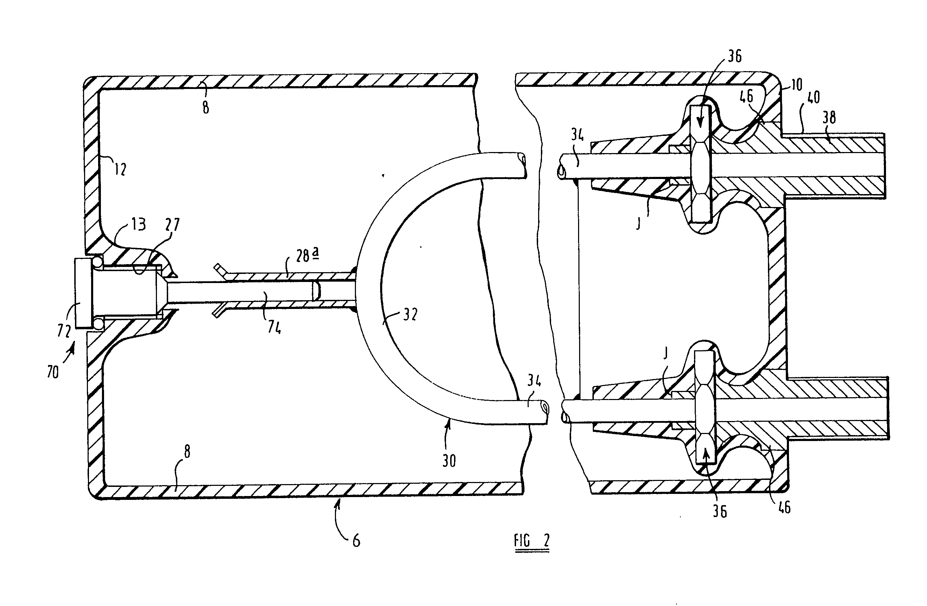

The cooling device which is the second embodiment of this is similar to that which is the first embodiment, and will be described hereinafter only in as much as it differs from said first embodiment, similar numerals being utilised in Figure 2 in relation to the second embodiment, with a suffix a where appropriate.

In the second embodiment, the end wall 12 is provided, during the moulding thereof, with a threaded aperture 27, within which a mounting device 70 is screwed, the mounting device comprising a plug 72, and a stem 74.

The support member secured to the cooling pipe 32 is in the form of a hollow sleeve 28a, in which the stem 74 extends, providing support for the cooling pipe 32 whilst allowing a small degree of relative movement to take place longitudinally of the stem 74, due to expansion and contraction of the cooling pipe.

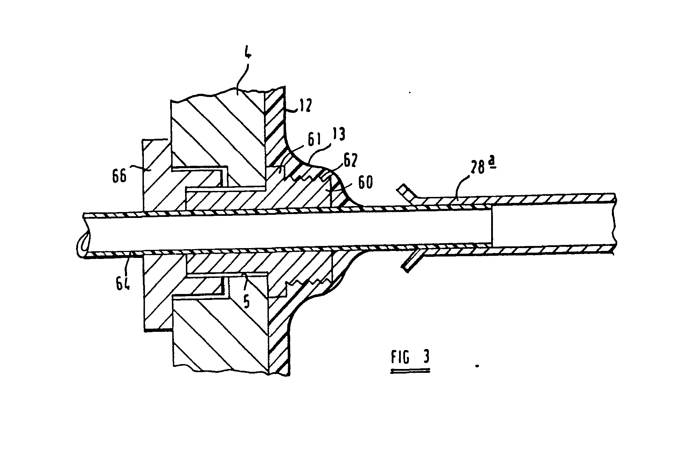

The aperture 27 is provided in the end wall 12 by the use of an insert member 60, located in an aperture in the end wall mould portion 4 prior to commencement of the rotational moulding operation (see Figure 3). The insert member 60 is positioned within an aperture 5 of the mould portion, with a shoulder 61 engaging an inner wall of the mould. A hollow tube 64 of PTFE is inserted through a longitudinal bore of the insert member, the tube 64 entering the hollow sleeve 28a secured to the cooling pipe 32, to support the cooling pipe during moulding, as has previously been described. A plug 66 is then screwed onto the exterior of the insert member 60, to hold the assembly in position during use.

During rotational moulding, the insert member 60 becomes hot and moulding material adheres to the exterior thereto, as is shown at 13.

As will be seen from Figure 3, the part of the insert member 60 which projects interiorly of the mould cavity is threaded, as at 62. Thus on completion of moulding the plug 66 may be withdrawn, and on separation of the mould members, the insert member 60 may be screwed away from the thickened portion 13 leaving the threaded aperture 27 extending through the end wall 12.

It will be appreciated that whilst moulding material may temporarily adhere to the tube 64, particularly in the region thereof immediately adjacent to the insert member 60, it may nonetheless readily be withdrawn by virtue of its construction of PTFE.

The aperture 27 may be utilised for the introduction of eutectic liquid into the interior of the housing, and on completion of filling, the aperture 27 may be closed by the use of the mounting device 72, an "O" ring being utilised to prevent leakage of fluid between the bore 27 and the mounting device.

During the insertion of the mounting device into the bore 27, the stem 66 enters the hollow sleeve 28a, conveniently being guided therein by a flaring of the outer end of the sleeve 28a.

As will be appreciated, by virtue of the fact that eutectic liquid may be introduced into the housing through the aperture 27, the aperture and plug system 56/58 required in the first embodiment is no longer necessary.

## Claims

1. A method of manufacturing a cooling device comprising a housing (6) containing a eutectic liquid, an elongate cooling pipe (30) in the housing through which cooling fluid is fed to cool the eutectic liquid, the elongate pipe comprising end portions (34) and an intermediate portion (32) between said end portions, characterised by the steps:

(a) locating the end portions (34) in a rotational mould (4);

(b) supporting the cooling pipe within the mould by the use of a supporting means (28; 28a, 64) extending from the intermediate portion (32) through a wall (12) of the mould; and

(c) rotationally-moulding the housing of the cooling device around the cooling pipe (30) and around the support means.

2. A method according to Claim 1 wherein the supporting means comprises a support member (28) which engages said intermediate portion (32) to provide support for the cooling pipe (30).

3. A method according to one of Claims 1 and 2 wherein the supporting means comprises elements (60, 64, 66) supported in an aperture (27) in a wall of the mould and which, on completion of the moulding operation, are removed to provide an aperture in the housing.

4. A method according to Claim 3 wherein said aperture provides a means for the introduction of a eutectic liquid into the cooling device.

5. A method according to one of Claims 3 and 4 wherein said aperture is closed by said elements (60, 64, 66).

6. A method according to any one of the preceding claims wherein the end portions of the cooling pipe are located in one end wall (10) of the rotational mould, and the intermediate portion of the cooling pipe is supported by the support means (28) in relation to the opposite end wall (12) of the mould (4).

7. A cooling device comprising a housing (6) containing a eutectic liquid, an elongate cooling pipe (30) in the housing through which cooling fluid may be fed to cool the eutectic liquid, the elongate pipe comprising end portions (34) and an intermediate portion (32) between said end portions, an aperture (27) being provided in one end wall (11, 12) of the housing for the introduction of eutectic liquid into the housing, means (72, 74) being provided to close said aperture, characterised in that the housing is a rotationally-moulded housing and a supporting means (28, 28a, 64) is provided extending from the intermediate portion (32) to an end wall (12) of the housing, to support the cooling device within the rotationally-moulded housing.

## Patentansprüche

1. Verfahren zum Herstellen einer Kühlvorrichtung mit einem Gehäuse (6), das ein eutektische Flüssigkeit enthält, einem länglichen Kühlrohr (30) in dem Gehäuse, durch das Kühlflüssigkeit zugeführt wird, um die eutektische Flüssigkeit abzukühlen, wobei das längliche Rohr Endabschnitte (34) und einen Zwischenabschnitt (32) zwischen besagten Endabschnitten umfaßt, gekennzeichnet durch die Schritte:

(a) Anordnen der Endabschnitte (34) in einer Rotationsform (4);

(b) Halten des Kühlrohres innerhalb der Form durch die Verwendung eines Haltemittels (28; 28a; 64), das sich vom Zwischenabschnitt (32) durch eine Wand (12) der Form hindurch erstreckt;

(c) Rotationsformen des Gehäuses der Kühlvorrichtung um das Kühlrohr (30) und um das Haltemittel herum.

2. Verfahren nach Anspruch 1, dadurch gekennzeichnet, daß das Haltemittel ein Halteteil (28) umfaßt, das mit besagtem Zwischenabschnitt (32) in Eingriff steht, um einen Halt für das Kühlrohr (39) zur Verfügung zu stellen.

3. Verfahren nach einem der Ansprüche 1 und 2, dadurch gekennzeichnet, daß das Haltemittel Elemente (60, 64, 66) umfaßt, die in einer Öffnung (27) in einer Wand der Form gehalten und, bei Abschluß des Formvorganges, entfernt werden, um eine Öffnung im Gehäuse zur Verfügung zu stellen.

4. Verfahren nach Anspruch 3, dadurch gekennzeichnet, daß besagte Öffnung ein Mittel für das Einführen einer eutektischen Flüssigkeit in die Kühlvorrichtung zur Verfügung stellt.

5. Verfahren nach einem der Ansprüche 3 und 4, dadurch gekennzeichnet, daß besagte Öffnung von besagten Elementen (60, 64, 66) verschlossen wird.

6. Verfahren nach einem der vorangehenden Ansprüche, dadurch gekennzeichnet, daß die Endabschnitte des Kühlrohres in einer Stirnwand (10) der Rotationsform angeordnet werden und daß der zwischenabschnitt des Kühlrohrs von dem Haltemittel (28) bezüglich der gegenüberliegenden Stirnwand (12) der Form (4) gehalten wird.

7. Kühlvorrichtung mit einem Gehäuse (6), das eine eutektische Flüssigkeit enthält, einem länglichen Kühlrohr (30) in dem Gehäuse durch das Kühlflüssigkeit zugeführt werden kann, um die eutektische Flüssigkeit abzukühlen, wobei das längliche Rohr Endabschnitte (34) und einen Zwischenabschnitt (32) zwischen besagten Endabschnitten umfaßt, eine Öffnung (27) in einer Stirnwand (11, 12) des Gehäuses für das Einführen von eutektischer Flüssigkeit in des Gehäuse vorgesehen ist saure Mittel (72, 74) zum Verschließen besagter Öffnung vorgesehen sind, dadurch gekennzeichnet, daß das Gehäuse ein rotationsgeformtes Gehäuse ist und ein Haltemittel (28, 28a, 64) zur Verfügung gestellt wird, das sich vom Zwischenabschnitt (32) zu einer Stirnwand (12) des Gehäuses hin erstreckt, um die Kühlvorrichtung innerhalb des rotationsgeformten Gehäuses zu halten.

**Revendications**

1. Procédé de fabrication d'un dispositif refroidisseur comprenant un logement (6) contenant un liquide eutectique, une conduit de refroidissement allongée (30) dans le logement à travers lequel est amené le fluide de refroidissement pore refroidir le liquide eutectique, la conduite allongée comprenant des portions d'extrémité (34) et une portion intermédiaire (32) entre les portions d'extrémité, caractérisé en ce qu'il comprend les étapes consistant à:

(a) positionner les portions d'extrémité (34) dans un moule rotatif (4);

(b) supporter la conduite de refroidissement à l'intérieur du moule à l'aide d'un moyen de support (28; 28a; 64) s'étendant à partir de la portion intermédiaire (32) à travers une paroi (12) du moule; et

(c) mouler de façon rotative le logement du dispositif de refroidissement autour de la conduite de refroidissement (30) et autour du moyen de support.

2. Procédé selon la revendication 1, dans lequel le moyen de support comprend un élément de support (28) qui coopère avec la portion intermédiaire (32) pour fournir un support à la conduite de refroidissement (30).

3. Procédé selon la revendication 1 ou 2, dans lequel le moyen de support comprend les éléments (60, 64, 66) supportés dans une ouverture (27) d'une paroi du moule et qui, lorsque l'opération de moulage est terminée, sont enlevés pour fournir une ouverture dans le logement.

4. Procédé selon la revendication 3, dans lequel l'ouverture fournit un moyen pour l'introduction d'un liquide eutectique dans le dispositif de refroidissement.

5. Procédé selon la revendication 3 ou 4, dans lequel l'ouverture est obturée par les éléments (60, 64, 66).

6. Procédé selon l'une quelconque des revendications précédentes, dans lequel les portions d'extrémité de la conduite de refroidissement sont situées dans une paroi d'extrémité (10) du moule rotatif, et la portion intermédiaire de la conduite de refroidissement est soutenue par un moyen de support (28) par rapport à la paroi d'extrémité opposée (12) du moule (4).

7. Dispositif de refroidissement comprenant un logement (6) contenant un liquide eutectique, une conduite de refroidissement allongée (30) dans le logement à travers lequel est amené le fluide de refroidissement pour refroidir le liquide eutectique, la conduite allongée comprenant des portions d'extrémité (34) et une portion intermédiaire (32) entre les portions d'extrémité, une ouverture (27) étant prévue dans une paroi d'extrémité (11, 12) du logement pour l'introduction du liquide eutectique dans le logement, dans moyens (72, 74) étant prévus pour obturer cette ouverture, caractérisé en ce que le logement est un logement moulé par rotation et en ce qu'il est prévu un moyen de support (28, 28a, 64) s'étendant à partir de la portion intermédiaire (32) jusqu'à une paroi d'extrémité (12) du logement, pour supporter le dispositif de refroidissement à l'intérieur du logement moulé par rotation

FIG. 1

FIG. 2

FIG 3